# EUROPÄISCHE PATENTSCHRIFT

(11) **EP 2 684 416 B1**
(45) Veröffentlichungstag und Bekanntmachung des Hinweises auf die Patenterteilung: **25.02.2015**
(21) Anmeldenummer: 11778835.6
(22) Anmeldetag: 26.10.2011
(51) Int. Cl.: H04W 84/18, H04W 72/12, H04W 8/00

(54) **FUNK-SENDE-/FUNK-EMPFANGSEINRICHTUNG UND VERFAHREN ZUR KOMMUNIKATION INNERHALB EINES NACH ART DES AD-HOC ZUSAMMENWIRKENDEN, INSBESONDERE DRAHTLOS-, KRAFTFAHRZEUGKOMMUNIKATIONSSYSTEMS**
RADIO TRANSMITTING / RADIO RECEIVING DEVICE AND METHOD FOR COMMUNICATION WITHING A VEHICULAR COMMUNICATION SYSTEM INTERACTING ACCORDING TO AD-HOC TYPE, ESPECIALLY WIRELESS
DISPOSITIF ÉMITTEUR RADIO / RÉCEPTEUR RADIO ET PROCEDE DE COMMUNICATION DANS UN SYSTEME DE COMMUNICATION DE VEHICULE DU TYPE D'INTERACTION AD HOC, NOTAMMENT SANS FIL

(30) Priorität: 21.06.2011 DE 102011077882
(43) Veröffentlichungstag der Anmeldung: 15.01.2014
(73) Patentinhaber: Siemens Aktiengesellschaft, 80333 München (DE)
(72) Erfinder: KASSLATTER, Fritz, A-3003 Gablitz (AT); RITTER, Thomas, A-1090 Wien (AT)
(86) Internationale Anmeldenummer: PCT/EP2011/068750
(87) Internationale Veröffentlichungsnummer: WO 2012/175146

(56) Entgegenhaltungen:
- WO-A1-2005/064863
- US-A1- 2003 128 690
- US-A1- 2004 042 417

## Beschreibung

Die Erfindung betrifft eine Funk-Sende-/Funk-Empfangseinrichtung zur Kommunikation innerhalb eines nach Art des ad-hoc zusammenwirkenden, insbesondere Drahtlos-, Kraftfahrzeugkommunikationssystems gemäß dem Oberbegriff des Anspruchs 1 sowie ein Verfahren zur Kommunikation innerhalb eines nach Art des ad-hoc zusammenwirkenden, insbesondere Drahtlos-, Kraftfahrzeugkommunikationssystems gemäß dem Oberbegriff des Anspruchs 26.

Es ist bekannt, dass Funk-Sende-/Funk-Empfangseinrichtungen zur Kommunikation innerhalb eines ad-hoc beispielsweise drahtlos zusammenwirkenden Kraftfahrzeugkommunikationssystems für die Kommunikation zwischen Verkehrsteilnehmern untereinander im Einsatz sind. Ad-hoc zusammenwirkend bedeutet so genannte ad-hoc Netzwerke, also im Wesentlichen sich selbst organisierende spontan durch direkte Kommunikation der beteiligten Netzknoten gebildete bzw. betriebene Netze. Im Straßenverkehr umfasst diese Kommunikation in der Regel Kraftfahrzeuge, daher wird sie auch aus dem Englischen entlehnt "car to car" (C2C) Kommunikation genannt. Diese Kommunikation umfasst aber auch die Kommunikation zur Verkehrsinfrastruktur, die beispielsweise durch so genannte "road side units", wie zum Beispiel Ampeln, gebildete Basisstationen zur Vermittlung der Kommunikation bzw. Verbreitung von Informationen an an die Ampel angeschlossene Informationsnetzwerke oder steuernde Verkehrszentralen, gebildet werden. Diese Kommunikation wird - ebenfalls aus dem Englischen entlehnt - "car to infrastructure" (C2I) genannt. Da im Grunde Kraftfahrzeuge nicht die einzigen Verkehrsteilnehmer darstellen, sondern auch Fahrräder bzw. Fahrradfahrer und Fußgänger ebenso beteiligt sind, umfasst diese Kommunikation auch den Austausch von Daten zwischen von ihnen betriebenen Funk-Sende-/Funk-Empfangseinrichtungen und den von Kraftfahrzeugen betriebenen Funk-Sende-/Funk-Empfangseinrichtungen. Hierfür gibt es kein aus dem Englischen entlehnten Begriff oder Akronym, aber sie fallen unter den für die Verallgemeinerung dieser Art von Kommunikation bekannten Begriff der "car to X" Technologie bzw. Kommunikation (C2X).

Dabei ist diese Art der Kommunikation von der bekannten Mobilfunkkommunikation zu unterscheiden, da erstere in der Regel automatisiert, also überwiegend ohne Anstoß oder erforderliche Aktionen des Nutzers erfolgt und dem Zweck dient, verkehrsrelevante Daten zu sammeln und auszutauschen, so dass idealer Weise auf alle möglichen Verkehrssituationen angemessen reagiert werden kann, beispielsweise durch Warnungen des Nutzers oder automatisierte Reaktionen des Kraftfahrzeugs.

Für die Sammlung von Daten und vor allem deren Austausch ist es bekannt, dass jedes Kraftfahrzeug eine zyklische Botschaft im Abstand von wenigen Sekunden aussendet, die eine Fahrzeug-ID und Angaben zu Geschwindigkeit, Richtung und Position enthält. Das Aussenden dieser zyklischen Standardbotschaften, auch "Beacons" genannt, kann zusätzlich zu anderen Nachrichten insbesondere auf vielbefahrenen Verkehrsrouten zu Überlastsituationen im Extremfall dem Blocken von anstehenden Daten führen, da die für die Drahtlos-Kraftfahrtkommunikation bereitgestellten Ressourcen begrenzt sind. Wenn dazu noch weitere Verkehrsteilnehmer wie Fußgänger und Fahrräder hinzukommen, verschärft sich die Situation zusätzlich.

WO 2005/064863 A1 offenbart Funkeinrichtungen für Ad-hoc Kraftfahrzeugkommunikationssysteme, wobei Meldungen ausgesendet und empfangen werden und daraufhin eine Häufigkeit der Aussendung von folgenden Meldungen festgelegt wird.

Der Erfindung liegt daher die Aufgabe zugrunde, die Eigenschaften eines ad-hoc zusammenwirkenden Kraftfahrzeugkommunikationssystems zu verbessern.

Diese Aufgabe wird ausgehend von der Funk-Sende-/FunkEmpfangseinrichtung gemäß dem Oberbegriff des Anspruchs 1 durch dessen kennzeichnende Merkmale, sowie ausgehend von dem Verfahren gemäß dem Oberbegriff des Anspruch 26, durch dessen kennzeichnende Merkmale, gelöst.

Die erfindungsgemäße Funk-Sende-/Funk-Empfangseinrichtung zur Kommunikation innerhalb eines nach Art des ad-hoc zusammenwirkenden, insbesondere Drahtlos-, Kraftfahrzeugkommunikationssystems ist derart ausgestaltet, dass sie eine Information über den Umfang vorgesehener Meldungen aussendet, mindestens eine weitere Funk-Sende-/Funk-Empfangseinrichtung die Information empfängt und auf Basis der empfangenen Information von der weiteren Funk-Sende-/Funk-Empfangseinrichtung eine Häufigkeit der Aussendung von zeitlich folgender Meldungen festgelegt wird.

Hierdurch wird sichergestellt, dass die Auslastung von Kommunikationskanälen stets an die lokalen und aktuellen Gegebenheiten erfolgt und somit insbesondere sicherheitsrelevante Meldungen verzögerungsfreier bzw. weitestgehend unblockiert versendet werden können. Die Häufigkeit der Aussendung wirkt dabei unmittelbar auf die Auslastung, so dass eine sehr schnelle Ressourcenentlastung gewährleistet ist.

Vorzugsweise ist die erfindungsgemäße Funk-Sende-/FunkEmpfangseinrichtung dabei derart ausgestaltet, dass es für die Kommunikation zwischen Verkehrsteilnehmern untereinander und/oder zwischen Verkehrsteilnehmern und Verkehrsinfrastruktur ausgestaltet ist.

Hierdurch wird gewährleistet, dass grundsätzlich alle am Verkehr Beteiligten insbesondere einen Beitrag zur Steigerung der Verkehrssicherheit leisten können, da die erfindungsgemäße Funk-Sende-/Funk-Empfangseinrichtung gemäß dieser Weiterbildung geeignet ist, sowohl zum Beispiel in Autos und Motorrädern oder anderen Fahrzeugen Kommunikation zu Verkehrsteilnehmerfahrzeugen bereitzustellen, als auch implementiert in Endgeräte, wie Handys oder PDAs, die verkehrsrelevante Kommunikation mit Fußgängern und Radfahrern bzw. ihren Geräten ermöglichen. Der Beitrag wird auch dadurch erbracht, dass eine Kommunikation zur Verkehrsinfrastruktur - also mit Funk-Sende-/Funk-Empfangseinrichtungen ausgestaltete zumeist ortsfeste Verkehrseinrichtungen wie Ampeln und dergleichen - erfolgen kann, so dass diese Einrichtung über eine Verbindung mit Verkehrszentralen eine an Verkehrssituationen angepasste Reaktion herbeiführen kann. Beide Kommunikationen kombiniert ermöglichen dabei die größte Durchdringung bzw. die genauesten Aussagen über die Verkehrssituation.

Die Erfindung kann auch dahingehend weitergebildet sein, dass die Funk-Sende-/Funk-Empfangseinrichtung zur Datenübertragung gemäß einem dedizierten Kurzstreckenfunkkommunikationsstandard, insbesondere dem so genannten Dedicated Short Range Communication, "DSRC", ausgestaltet ist. Solche Kurzstreckenfunkstandards sind besonders für die Kommunikation zwischen Vehikeln und anderen mobilen Verkehrsteilnehmern geeignet und gewährleisten durch die Standardisierung, dass die Interaktion auch funktioniert. Insbesondere integriert mit dem WLAN Standard 802.11 und seinen Derivaten, wie 802.11a/b/e/g/n/p funktioniert dies sehr gut.

Soll die erfindungsgemäße Funk-Sende-/Funk-Empfangseinrichtung in Europa betrieben werden, so ist es vorteilhaft, wenn sie zur Datenübertragung gemäß dem so genannten Wireless Access in Vehicular Environments, "WAVE"-, Standard oder Derivaten hiervon ausgestaltet ist.

Eine definierte Funkschnittstelle der Funk-Sende-/FunkEmpfangseinrichtung erhält man dabei, wenn die Funk-Sende-/Funk-Empfangseinrichtung zur Datenübertragung zumindest teilweise gemäß Standards IEEE 1609.4 und/oder ETSI Intelligent Transportation Systems, ITS" oder seinen Derivaten ausgestaltet ist.

Eine weite Verbreitung und bzw. Durchdringung bringt dabei die Weiterbildung, bei der die Funk-Sende-/Funk-Empfangseinrichtung zu einer Datenübertragung zumindest teilweise gemäß Standards IEEE802.11 oder seinen Derivaten, insbesondere dem IEEE 802.11p, ausgestaltet ist, da mittlerweile jedes tragbare Unterhaltungsgerät, wie Handy, PDA, eine derartige WLAN-Schnittstelle aufweist, so dass ohne große Änderungen diese Geräte für die verkehrsrelevante Kommunikation unter Verkehrsteilnehmern genutzt werden können. Sehr zuverlässig bei sich schnell bewegenden Objekten wie motorisierten Fahrzeugen ist dabei die das Derivat IEEE 802.11p nutzende Weiterbildung.

Diese Zuverlässigkeit von IEEE 802.11p macht auch die Weiterbildung vorteilhaft, bei der die Funk-Sende-/Funk-Empfangseinrichtung zu einer höher priorisierten ersten, insbesondere sicherheitsrelevanten, Datenübertragung gemäß IEEE 802.11p ausgestaltet ist. Auch die Nutzung gemäß IEEE 802.11e hat diesen Vorteil. Nicht zuletzt auch aufgrund der demgemäß durchführbaren Priorisierung.

Alternativ oder ergänzend ist es von Vorteil, wenn die Funk-Sende-/Funk-Empfangseinrichtung derart weitergebildet wird, dass sie zu einer zweiten niedriger priorisierten, insbesondere teilnehmerindividuellen, Datenübertragung gemäß dem IEEE 802.11 a/b/g ausgestaltet ist. Insbesondere bei der Aufteilung in teilnehmerindividuelle Daten, wie beispielsweise Informationsabrufen im Internet, und sicherheitsrelevanten Informationen kann diese Weiterbildung die Übertragungsmöglichkeiten und -häufigkeiten für die sicherheitsrelevanten Datenübertragungen erhöhen.

Für die Sicherheitsrelevanz und Verkehrssteuerung ist die Weiterbildung von Vorteil, bei der die Funk-Sende-/FunkEmpfangseinrichtung derart ausgestaltet ist, dass die Meldungen Statusmeldungen über den Zustand eines Verkehrsteilnehmers umfassen.

Alternativ oder ergänzend kann die Funk-Sende-/FunkEmpfangseinrichtung dabei zur Aussendung von Meldungen einen Steuerkanal, insbesondere den so genannten Control Channel "CCH" oder einen Dienstekanal, insbesondere den so genannten Service Channel "SCH" nutzen. Diese Kanäle werden in der Regel bei der Datenübertragung bevorzugt behandelt, beispielsweise in dem ihnen Funkressourcen exklusiv reserviert und für sie freigehalten werden. Dies erhöht ebenfalls die Leistungsfähigkeit besonders bei hochpriorisierten Daten, die die Verkehrssicherheit betreffen bzw. erhöhen können.

Vorzugsweise ist die Funk-Sende-/Funk-Empfangseinrichtung derart weitergebildet, dass die Informationen über den Umfang vorgesehener Meldungen auf in einem der Funk-Sende-/FunkEmpfangseinrichtung zugeordneten Datenspeicher vorliegenden zum Versand durch die Funk-Sende-/Funk-Empfangseinrichtung vorbereiteten Meldungen beruhen. Die Information über den Umfang korreliert direkt mit der zu erwarteten Auslastung der Kanäle hierdurch, so dass dies eine relativ präzise Voraussage über die kommende Auslastung ermöglicht.

Ist Funk-Sende-/Funk-Empfangseinrichtung derart weitergebildet, dass der Umfang als ein der Zahlenmenge Integer zugehöriger die Anzahl der zu versendenden Meldungen wiedergebender, insbesondere als *"channelLoadtoNeighbors"* bezeichneter, erster Wert, ausgestaltet ist, wird damit ein leicht zu ermittelnder, einfach zu codierender Wert für die Steuerung der folgenden Schritte zur Verfügung gestellt.

Vorzugsweise bzw. hierzu ergänzend ist die Funk-Sende-/FunkEmpfangseinrichtung derart weitergebildet, dass der erste Wert zumindest mit einem Teil von zu übertragenden Nachrichten, vorzugsweise jeder Nachricht, übermittelt wird. Hierdurch ist eine gute Aktualisierung des Auslastungszustands des Systems möglich. Ferner werden zusätzliche Kopfdaten (Header-Daten) vermieden, die nötig wären, wenn die Information separat zu anderen Nachrichten verschickt werden würde. Somit wird der erfindungsgemäße Gedanke der Reduktion von Datenlast zusätzlich gestützt. Ferner wird insbesondere bei geeignet gewählter Dimension der Codierung des Wertes ermöglicht, dass evtl. ungenutzte Bitdatenfelder des Kopfteils der Nachrichten zur Codierung genutzt werden können, so dass die Übermittlung des Wertes somit überhaupt keine zusätzliche Last bedeuten.

Eine einfach zu implementierende und einfach zu dekodierende Möglichkeit wird geboten, wenn die Funk-Sende-/FunkEmpfangseinrichtung derart ausgestaltet ist, dass die Übermittlung des ersten Wertes innerhalb eines Nachrichtenfeldes der Datenübertragung der Nachricht erfolgt.

Ergänzend hierzu kann Funk-Sende-/Funk-Empfangseinrichtung derart ausgebildet sein, dass das Nachrichtenfeld als Feld mit fester Bitbreite ausgestaltet ist. Eine definierte Breite erleichtert die Dekodierung, wobei insbesondere die Breite von 4 Bit für die meisten zu erwartenden Nachrichtenmengen angemessen ist.

Ist Funk-Sende-/Funk-Empfangseinrichtung derart ausgestaltet, dass sie als weitere Funk-Sende-/Funk-Empfangseinrichtung auf Grundlage von, insbesondere allen, benachbarten Funk-Sende/Funk-Empfangseinrichtungen empfangenen ersten Werten einen der Zahlenmenge Integer zugehörigen, insbesondere als *"channelLoadfromNeighbors"* bezeichneten, zweiten Wert bildet, kann ihrem weiteren Verhalten hinsichtlich der zu übertragenden Nachrichten ein sehr präzises Bild von der zukünftigen Lage zugrunde legen. Die einzelnen Nachbarn mögen sich zwar, insbesondere aufgrund der Mobilität, ändern aber in Summe bleibt die Anzahl der Stationen häufig nahezu gleich bis sich wenig ändernd, so dass die vorab kommunizierte Anzahl von zu sendenden Nachrichten auch wenn die Stationen im Folgenden keine Nachbarn mehr sein mögen, doch noch eine gute Abschätzung über den kommenden Auslastungszustand geben

Vorzugsweise wird die Funk-Sende-/Funk-Empfangseinrichtung derart weitergebildet, dass bei Überschreiten eines, insbesondere als *"channelLoadfromNeighbors_active"* bezeichneten, ersten Schwellwertes durch den zweiten Wert die Häufigkeit der Aussendung von zeitlich folgender Meldungen auf einen dritten Wert festgelegt wird. Schwellwertvergleiche sind leicht zu implementierende Verfahrensschritte zur Steuerung von Systemen. Ferner können deren Werte beispielsweise durch Simulationen optimiert werden und auch zu einem späteren Zeitpunkt angepasst werden.

Wird die Funk-Sende-/Funk-Empfangseinrichtung derart weitergebildet, dass bei Überschreiten eines, insbesondere als *"channelLoadfromNeighbors_restrictive*" bezeichneten, zweiten Schwellwertes, durch den zweiten Wert die Häufigkeit der Aussendung von zeitlich folgenden Meldungen auf einen vierten Wert festgelegt wird, kann auf einfache Weise eine weitere Eskalationsstufe bzw. eine feinere Abstufung der Reaktion des Systems auf den Auslastungszustand herbeigeführt werden.

Vorzugsweise wird die Funk-Sende-/Funk-Empfangseinrichtung derart weitergebildet, dass bei Unterschreiten des zweiten Schwellwertes durch den zweiten Wert die Häufigkeit der Aussendung von zeitlich folgenden Meldungen auf den dritten Wert festgelegt wird. Durch diese Weiterbildung kann eine abgestufte Freigabe von Ressource für die Versendung von niedrig priorisierten Daten ermöglicht werden.

Ergänzend kann die Funk-Sende-/Funk-Empfangseinrichtung derart ausgestaltet sein, dass bei Unterschreiten des ersten Schwellwertes durch den zweiten Wert die Häufigkeit der Aussendung von zeitlich folgenden Meldungen auf einen fünften Wert festgelegt wird. Hierdurch wird eine weitere Deeskalation bzw. Freigabestufe erzielt, die eine feinere Anpassung an die Gegebenheiten ermöglicht.

Wird die Funk-Sende-/Funk-Empfangseinrichtung derart weitergebildet, dass erster und/oder zweiter Schwellwert derart festgelegt sind, dass die Differenz ihrer Werte größer Null, insbesondere Fünf, beträgt, kann eine Hysterese implementiert werden, so dass ein schnelles störendes Oszillieren des Systems zwischen mehreren Schwellwerten vermieden wird. Auch dieser Wert lässt sich durch Simulationen optimieren und vorzugsweise nachträglich ändern.

Vorzugsweise wird die erfindungsgemäße Funk-Sende-/FunkEmpfangseinrichtung derart weitergebildet, dass der dritte, vierte und/oder fünfte Wert gemäß definierter Systemzustände einer dezentralen, insbesondere gemäß dem ETSI TS 102 687 Standard vorgeschriebene als "Decentralized Congestion Control" bezeichnete, Lastensteuerung gebildet werden. Hierdurch werden vordefinierte Zustände genutzt, was eine Implementierung weniger komplex gestaltet und zudem auch die Nutzung weiterer vom System definierte Eigenschaften ermöglicht, wie beispielsweise die Signalisierung von Zuständen und/oder die entsprechende Behandlung von (Über-)Lastzuständen des Systems.

Weitere Durchdringung erreicht man, wenn die Funk-Sende-/Funk-Empfangseinrichtung so weitergebildet wird, dass sie zur Kommunikation mit Verkehrsteilnehmern zumindest teilweise gemäß dem europäischen Standard ETSI TC ITS, dem amerikanischen so genannten "Vehicle Safety Communications Program, VSC" oder japanischen "Advanced Vehicle Safety Program, AVS" ausgestaltet ist. Hierdurch wird die erfindungsgemäße Einrichtung in verschiedenen Teilen der Welt einsetzbar.

Denkbar ist auch, dass die Funk-Sende/Funk-Empfangseinrichtung bzw. das zugehörige Verfahren die Kommunikation mit Verkehrsteilnehmern zumindest teilweise gemäß einem Mobilfunkstandard, wie dem GSM, UMTS oder Derivaten hiervon, durchführt. Dies ist insbesondere für eine bessere Durchdringung und Erfassung von Vorteil, da Fußgänger und Radfahrer, welche sich in Besitz eines Mobilfunkgerätes (Handys) befinden, wie bereits angedeutet, ebenfalls als Verkehrsteilnehmer in die Kommunikation integriert werden können und so ein umfassenderes Gesamtbild des Verkehrs gebildet werden kann.

Dies wird vorteilhaft ergänzt bzw. es bietet sich auch die Alternative, die Funk-Sende-/Funk-Empfangseinrichtung derart weiterzubilden, dass sie zur Kommunikation mit Verkehrsteilnehmern zumindest teilweise gemäß dem ISO Standard "continuous-air long and medium range", CALM, ausgestaltet ist. Damit ist die Einrichtung nicht nur weltweit nutzbar, sondern dies auch ohne Änderungen bzw. nationalen Anpassungen, was dem Mobilitätsgedanken von Fahrzeugen angemessen ist.

Die Erfindung betrifft auch ein Verfahren zur Kommunikation innerhalb eines nach Art des ad-hoc zusammenwirkenden, insbesondere Drahtlos-, Kraftfahrzeugkommunikationssystems, bei dem
a) eine erste Funk-Sende-/Funk-Empfangseinrichtung eine Information über den Umfang vorgesehener Meldungen aussendet,
b) mindestens eine weitere Funk-Sende-/Funk-Empfangseinrichtung die Information empfängt und
c) auf Basis der empfangenen Information von der weiteren Funk-Sende-/Funk-Empfangseinrichtung eine Häufigkeit der Aussendung von zeitlich folgender Meldungen festgelegt wird.

Dieses Verfahren erlaubt - in den Einrichtungen implementiert - eine Steigerung der Ausschöpfung der Vorteile des erfindungsgemäßen Steuerns der Auslastung zugunsten von Verkehrssicherheit.

Weiterbildungen des Verfahrens bieten "mutatis mutandis" dieselben Vorteile wie die entsprechenden Anordnungsweiterbildungen, jeweils mit dem zusätzlichen Vorteil, dass sie zur Realisierung des gegenständlichen Vorteils beitragen.

Die Erfindung wird beispielhaft anhand zweier Figuren näher erläutert, dabei zeigt die
- Figur 1: schematisch die Situation von Verkehrsteilnehmern in einem mobilen ad-hoc Netz, und die
- Figur 2: den Ablauf einer Implementierung des erfindungsgemäßen in einem gemäß ETSI TS 102 687 funktionierenden System.

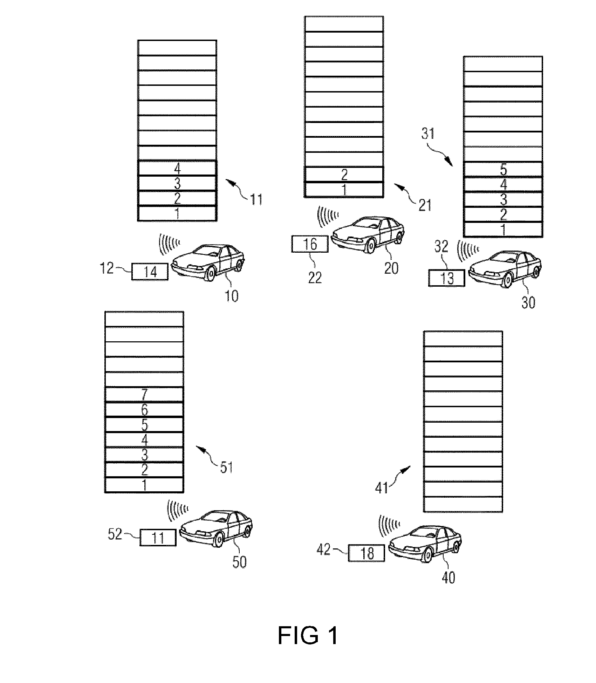

In Figur 1 ist ein zur Drahtlos-Kraftfahrzeugkommunikation fähiges ad-hoc Netzwerk dargestellt. Dabei handelt es sich um ein gemäß ETSI TC ITS ausgestaltetes Netzwerk. Alternativ könnte es auch ein nach ISO standardisiertes CALM Netz sein oder eines, das gemäß dem so genannten "Vehicle Safety Communications Program, VSC" oder japanischen "Advanced Vehicle Safety Program, AVS" gebildet ist, handeln.

Die Darstellung nach Figur 1 umfasst 5 Verkehrsteilnehmer 10, 20, 30, 40, 50, beispielsweise Fahrzeuge oder aber auch Personen, die ein entsprechendes Kommunikationsgerät, wie beispielsweise ein WLAN-fähiges Mobiltelefon mit sich führen, die als Teilnehmer eines mobilen ad-hoc Netzes, beispielsweise auf Basis des WLAN Standards IEEE 802.11p miteinander kommunizieren.

Alternativ bzw. ergänzend ist der Einsatz von IEEE 802.11e, IEEE 802.11 a/b/g/n oder IEEE 1609.4 möglich, einzelne oder mehrere davon im Mischbetrieb.

Das verwendete Frequenzband wird dabei beispielsweise im 5Ghz-Bereich angesiedelt sein.

Neben den genannten WLAN Standards kann insbesondere bei der Beteiligung von Personen eine GSM Infrastruktur, vergleichbar wie es zum Beispiel auch bei so genannten eCall Systemen realisiert ist, für die ad-hoc Kommunikation der Fahrzeuge/Infrastruktur (C2X) genutzt werden.

Die erfindungsgemäßen Funk-Sende-/Funk-Empfangseinrichtungen sind dabei in den Endgeräten der Personen oder in den Fahrzeugen sowie der Infrastruktur integriert. Also idealer Weise flächendeckend bei den Verkehrsteilnehmern und der Verkehrsinfrastruktur verteilt, so dass im Folgenden auch (Verkehrs-)Teilnehmer und (Verkehrs-)Infrastruktur als eine vereinfachende Bezeichnung für Funk-Sende-/Funk-Empfangseinrichtung(en) verwendet wird.

Sofern im Fahrzeug nicht mit der erfindungsgemäßen Funk-Sende-/Funkempfangseinrichtung ausgestaltete tragbare Endgeräte von Personen im Fahrzeug zur Kraftfahrzeugkommunikation genutzt werden, welche drahtlos mit Funktionsgruppen des Kraftfahrzeugs kommunizieren, kann die erfindungsgemäße Funk-Sende-/Funk-Empfangseinrichtung beispielsweise über ein BusSystem derart im Fahrzeug integriert sein, dass es mit den anderen Funktionsgruppen des Fahrzeugs kommuniziert. Dabei kann es sich um einen CAN-BUS handeln. Neben CAN ist aber auch der Einsatz anderer Bussysteme wie LIN, MOST, Byteflight oder Ähnliche denkbar.

Dabei sendet jeder Teilnehmer in periodisch wiederkehrenden Abständen von typisch etwa 100 msec über den nach diesem Standard vorgesehenen Control Channel (CCH) oder Service Channel (SCH) unter anderem Informationen über Position, Geschwindigkeit und die Fahrtrichtung aus.

Erfindungsgemäß werden nun zusätzlich von jedem Verkehrsteilnehmer 10, 20, 30, 40, 50 Informationen über den Umfang vorgesehener Meldungen 12, 22, 32, 42, 52 ausgesendet. Diese Informationen beruhen auf den in einem Datenspeicher 11, 21, 31, 41, 51, des Teilnehmers 10, 20, 30, 40, 50 vorliegenden zum Versand vorbereiteten Meldungen.

Nach einer einfachen Lösung wird lediglich die Zahl der in dem jeweiligen Datenspeicher 11, 21, 31, 41, 51 vorliegenden Meldungen gesendet, denkbar ist es aber auch, die Information über das gesamte Datenvolumen zu senden und so eine genauere Information über die zu erwartenden Datenmengen zu erhalten.

Ferner ist es denkbar, dass die Zahl der anstehenden Meldungen durch einen Algorithmus ermittelt wird, welcher beispielsweise die Historie insbesondere der Anzahl zu einem früheren Zeitpunkt versendeter Meldungen berücksichtigt und daraus eine zukünftige Anzahl möglicher Nachrichten prognostiziert. Dies hätte unter anderem den Vorteil, schneller agieren zu können.

Auf Basis der von den jeweils anderen Teilnehmern erhaltenen Informationen über den gesamten Umfang 12, 22, 32, 42, 52 der vorgesehenen Meldungen ermittelt nun jeder Teilnehmer 10, 20, 30, 40, 50 eine Prognose über die Auslastung des mobilen ad-hoc Netzes in einem vorgegebenen Zeitraum.

Wenn nun diese prognostizierte Auslastung bestimmte Werte überschreitet, reduzieren die Teilnehmer 10, 20, 30, 40, 50 die Frequenz ihrer Meldungen bzw. vergrößern die zeitlichen Abstände zwischen den einzelnen Meldungen und reduzieren damit die Netzbelastung, so dass mit der Erfindung eine wirkungsvolle Lastregelung gegeben ist.

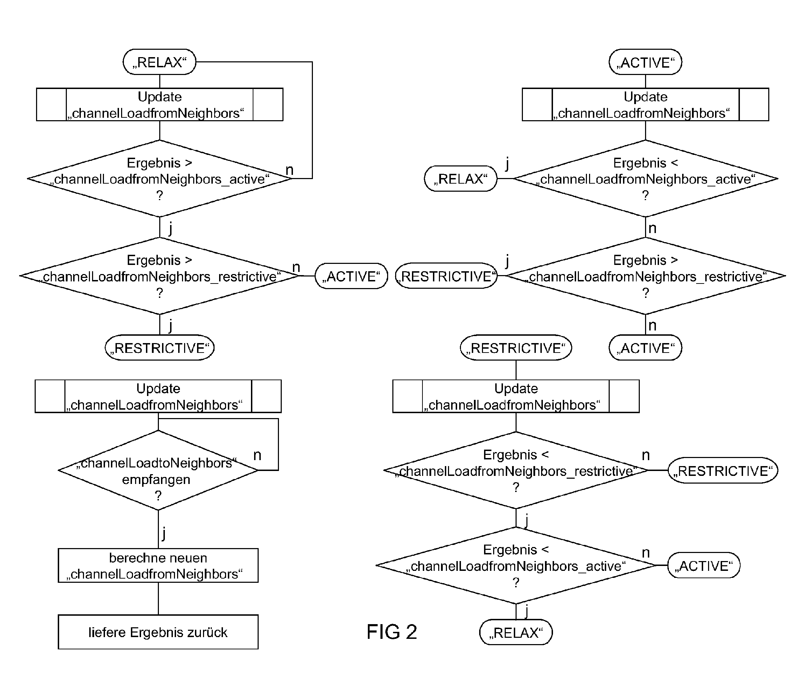

Die Figur 2 zeigt ein Ablaufdiagramm, welches auf Ausführungsbeispielen des erfindungsgemäßen Verfahrens und der erfindungsgemäßen Funk-Sende-/Funk-Empfangseinrichtung durchgeführt wird und welches nach ETSI TS 102 687 ausgestaltet ist.

Beides setzt dabei auf die gemäß diesem Standard definierte dezentrale Lastensteuerung, der so genannten "Decentralized Congestion Control" DCC auf.

Dort sind ein erster Zustand RELAX, ein zweiter Zustand ACTIVE und ein dritter Zustand RESTRICTIVE definiert.

Im ersten Zustand RELAX bewegt sich die Ressourcenbelegung in einem normalen Rahmen und daher bedarf es kaum einer Regulierung.

Im zweiten Zustand ACTIVE kann die Ressourcenbelegung schon an Grenzen stoßen bzw. die Gefahr besteht, dass weitere insbesondere hoch(sicherheits)relevante Daten nicht versandt werden können. In diesem Zustand können schon erste Maßnahmen zur Regulierung erforderlich sein.

Im dritten Zustand RESTRICTIVE zeichnet sich schon eine Überlastsituation, die stärkere Maßnahmen erfordert.

Diese erfindungsgemäße Klassifizierung unter Nutzung der bekannten Zustände wird durch die erfindungsgemäße Übermittlung von geplanten bzw. anstehenden Nachrichten in Form der reinen Anzahl oder sogar des Umfangs der Nachrichten durchgeführt.

Im gezeigten Beispiel soll dies allein die Zahl der anstehenden Nachrichten sein, welche beispielsweise beginnend im ersten Zustand RELAX einer Subroutine zum Update eines Indikator wertes *"channelLoadfromNeighbors"* führt. Dabei kann die Anzahl durch wenige Bits, beispielsweise 4 Bits, codiert in allen Meldungen, die benachbarte Stationen versenden, enthalten sein.

Daraufhin erfolgt dann durch Akkumulation, also beispielsweise die Summenbildung über alle empfangenen Angaben über die Anzahl der anstehenden Nachbarn *"channelLoadtoNeighbors",* die eine Ermittlung von in nächster Zeit (immediate next time) zu erwartenden Nachrichten. Die zugrunde gelegte Zeit kann dabei als Variable "immediate next time" mit Werten beispielsweise im Millisekundenbereich eingestellt sein.

Wurde der Update des Wertes der zu erwartenden Nachrichten *"channelLoadfromNeighbors"* im ersten Zustand RELAX angestoßen, so erfolgt ein erster Schwellwertvergleich, bei dem der aktuelle Wert der zu erwartenden Nachrichten *"channelLoadfromNeighbors"* mit einem ersten eine erste Eskalationsstufe repräsentierenden Schwellwert *"channelLoadfromNeighbors_active" verglichen wird.*

Ist das Resultat des Vergleichs, dass der Wert der zu erwartenden Nachrichten *"channelLoadfromNeighbors"* größer ist als der erste Schwellwert *"channelLoadfromNeighbors_active",* wird in einem nächsten Schwellwertvergleich überprüft, ob der Wert der zu erwartenden Nachrichten *"channelLoadfromNeighbors*_*active*" größer einem zweiten eine zweite Eskalationsstufe repräsentierenden Wert *"channelLoadfromNeighbors_restrictive"* ist. Ist das nicht der Fall, ergibt die dahinterstehende Logik, dass sich die Auslastung der Ressourcen in einem Zustand zwischen dem zweiten Zustand ACTIVE und dem dritten Zustand RESCTRICTIVE befindet. In diesem Zustand wird das System gemäß DCC in den Zustand ACTIVE versetzt bzw. dem System wird dieser Zustand gemeldet und entsprechende insbesondere erfindungsgemäße Lasten-steuernde Maßnahmen werden eingeleitet.

Wenn aber der Fall eintritt, dass der Wert also größer ist, so befindet sich das System in einem Zustand der Überlast, also dem dritten Zustand RESTRICTIVE mit den entsprechenden diesen Systemzustand kennzeichnenden Maßnahmen zur Regulierung der Last.

In beiden Zuständen erfolgt, wie der Darstellung zu entnehmen ist, ebenfalls ein Update des Wertes der zu erwartenden Nachrichten *"channelLoadfromNeighbors_active"* mit anschließenden Schwellwertvergleichen mit dem ersten Schwellwert *"channel LoadfromNeighbors_active"* und gegebenenfalls mit dem zweiten Schwellwert *"channelLoadfromNeighbors_restrictive".* Die zweite Überprüfung ist nämlich nur dann erforderlich, wenn die erste Überprüfung nicht sofort einen Zustandswechsel indiziert. Die Überprüfungen erfolgen allerdings mit anderer Logik.

Dass heißt, ausgehend vom zweiten Zustand ACTIVE wird der erste Schwellwertvergleich überprüft, ob der Wert der zu erwartenden Nachrichten *"channelLoadfromNeighbors"* kleiner dem ersten Schwellwert *"channelLoadfromNeighbors_active"* ist. Wenn das der Fall ist, bedeutet es, dass sich die Auslastung normalisiert, also entspannt hat, und somit das System wieder den ersten Zustand RELAX einnimmt. Ist dies nicht der Fall, erfolgt die zweite Schwellwertüberprüfung, bei der ermittelt wird, ob der Wert der zu erwartenden Nachrichten *"channelLoadfromNeighbors"* größer dem zweiten Schwellwert *"channelLoadfromNeighbors_restrictive"* ist. Denn wenn der Wert nicht kleiner geworden ist, so besteht die Möglichkeit, dass er größer geworden ist. Ist er größer, wird in den dritten Zustand RESTRICTIVE gewechselt. Falls er es nicht ist, bedeutet es, dass die Auslastung sich immer noch im zweiten Zustand ACTIVE befindet.

Dagegen wird ausgehend vom dritten Zustand RESTRICTIVE beim ersten Schwellwertvergleich überprüft, ob der Wert der zu erwartenden Nachrichten *"channelLoadfromNeighbors"* kleiner als der zweite Schwellwert *"channelLoadfromNeighbors_restrictive*" geworden ist. Ist das nicht der Fall, bleibt das System im dritten Zustand RESTRICTIVE. Falls es doch der Fall ist, wird im nächsten Schritt überprüft, ob der Wert der zu erwartenden Nachrichten *"channelLoadfromNeighbors"* sogar soweit gesunken ist, dass er kleiner als der erste Schwellwert *"channelLoadfromNeighbors_active"* ist. Wenn das der Fall ist, bedeutet es, die Auslastung des Systems ist entspannt. Entsprechend wird dem System der erste Zustand RELAX angezeigt bzw. dieser eingenommen und Maßnahmen zur Regulierung der Auslastung ebenfalls angepasst, d.h. beispielsweise komplett zurückgenommen.

Falls aber der Wert der zu erwartenden Nachrichten *"channelLoadfromNeighbors"* nicht auch kleiner als der erste Schwellwert *"channelLoadfromNeighbors_active"* ist, dann hat sich die Auslastung des Systems lediglich auf den zweiten Zustand ACTIVE reduziert und die Maßnahmen zur Regulierung der Auslastung werden nun entsprechend diesem Zustand durchgeführt.

Mit diesem Verfahren ist das System nun in der Lage, der Entwicklung der Auslastung des Systems in beide Richtungen - also Steigerung der Auslastung und Sinken der AuslastungRechnung zu tragen. Damit das System aber nicht ständig zwischen den Zuständen springt, werden die beiden Schwellwerte *"channelLoadfromNeighbors_restrictive"* und *"channelLoadfromNeighbors*_*active*" so gewählt bzw. der Schwellwertvergleich so realisiert, dass es also nicht zu so einer ungewollten Oszillation zwischen den Zuständen kommt.

Hierzu kann dies durch Setzen einer Systemvariablen wie *"channelLoadfromNeighbors_hysteresis"* mit einem geeigneten Wert, beispielsweise 5, erreicht werden. D.h. bei dem Schwellwertvergleich wird ein Zustandswechsel nur dann initiiert, wenn der Wert der zu erwartenden Nachrichten *"channelLoadfromNeighbors"* um entsprechenden Schwellwert plus 5 übertroffen oder um entsprechenden Schwellwert minus 5 unterschritten wird.

Die Erfindung ist nicht auf die gezeigten Beispiele beschränkt, sondern umfasst dabei alle Ausgestaltungen, die den durch die Ansprüche definierten erfindungsgemäßen Gedanken beinhalten und gleichwertige Wirkung erzielen.

## Patentansprüche

1. Funk-Sende-/Funk-Empfangseinrichtung (10, 20, 30, 40, 50) zur Kommunikation innerhalb eines nach Art des ad-hoc zusammenwirkenden, insbesondere Drahtlos-, Kraftfahrzeugkommunikationssystems, **dadurch gekennzeichnet, dass** sie derart ausgestaltet ist, dass
a) sie eine Information über den Umfang vorgesehener Meldungen (12, 22, 32, 42, 52) aussendet,
b) mindestens eine weitere Funk-Sende-/FunkEmpfangseinrichtung (10, 20, 30, 40, 50) die Information empfängt und
c) auf Basis der empfangenen Information von der weiteren Funk-Sende-/Funk-Empfangseinrichtung (10, 20, 30, 40, 50) eine Häufigkeit der Aussendung von zeitlich folgender Meldungen festgelegt wird.

2. Funk-Sende-/Funk-Empfangseinrichtung (10, 20, 30, 40, 50) nach Anspruch 1, **dadurch gekennzeichnet, dass** es für die Kommunikation zwischen Verkehrsteilnehmern (10, 20, 30, 40, 50) untereinander und/oder zwischen Verkehrsteilnehmern (10, 20, 30, 40, 50) und Verkehrsinfrastruktur ausgestaltet ist.

3. Funk-Sende-/Funk-Empfangseinrichtung (10, 20, 30, 40, 50) nach einem der vorhergehenden Ansprüche, **dadurch gekennzeichnet, dass** sie zur Datenübertragung gemäß einem dedizierten Kurzstreckenfunkkommunikationsstandard, insbesondere dem so genannten Dedicated Short Range Communication, "DSRC", ausgestaltet ist.

4. Funk-Sende-/Funk-Empfangseinrichtung (10, 20, 30, 40, 50) nach dem vorherigen Anspruch, **dadurch gekennzeichnet, dass** es zur Datenübertragung gemäß dem so genannten Wireless Access in Vehicular Environments, "WAVE"-, Standard oder Derivaten hiervon ausgestaltet ist.

5. Funk-Sende-/Funk-Empfangseinrichtung (10, 20, 30, 40, 50) nach dem vorhergehenden Anspruch, **dadurch gekennzeichnet, dass** sie zur Datenübertragung zumindest teilweise gemäß Standards IEEE 1609.4 und/oder ETSI Intelligent Transportation Systems, ITS oder seinen Derivaten ausgestaltet ist.

6. Funk-Sende-/Funk-Empfangseinrichtung (10, 20, 30, 40, 50) nach einem der beiden vorhergehenden Ansprüche, **dadurch gekennzeichnet, dass** sie zu einer Datenübertragung zumindest teilweise gemäß Standards IEEE802.11 oder seinen Derivaten, insbesondere dem IEEE 802.11p, ausgestaltet ist.

7. Funk-Sende-/Funk-Empfangseinrichtung (10, 20, 30, 40, 50) nach dem vorhergehenden Anspruch, **dadurch gekennzeichnet, dass** sie zu einer höher priorisierten ersten, insbesondere sicherheitsrelevanten, Datenübertragung gemäß IEEE 802.11e oder IEEE 802.11p ausgestaltet ist.

8. Funk-Sende-/Funk-Empfangseinrichtung (10, 20, 30, 40, 50) nach einem der Ansprüche 6 bis 7, **dadurch gekennzeichnet, dass** sie zu einer zweiten niedriger priorisierten, insbesondere teilnehmerindividuellen, Datenübertragung gemäß dem IEEE 802.11 a/b/g ausgestaltet ist.

9. Funk-Sende-/Funk-Empfangseinrichtung (10, 20, 30, 40, 50) nach einem der vorhergehenden Ansprüche, **dadurch gekennzeichnet, dass** die Meldungen Statusmeldungen über den Zustand eines Verkehrsteilnehmers (10, 20, 30, 40, 50) umfassen.

10. Funk-Sende-/Funk-Empfangseinrichtung (10, 20, 30, 40, 50) nach einem der vorhergehenden Ansprüche, die derart ausgestaltet ist, dass zur Aussendung von Meldungen ein Steuerkanal, insbesondere der so genannte Control Channel "CCH", ein Dienstekanal, insbesondere der so genannte Service Channel "SCH", genutzt wird.

11. Funk-Sende-/Funk-Empfangseinrichtung (10, 20, 30, 40, 50) nach einem der vorhergehenden Ansprüche, **dadurch gekennzeichnet, dass** die Informationen über den Umfang vorgesehener Meldungen (12, 22, 32, 42, 52) auf in einem der Funk-Sende-/Funk-Empfangseinrichtung (10, 20, 30, 40, 50) zugeordneten Datenspeicher (11, 21, 31, 41, 51) vorliegenden zum Versand durch die Funk-Sende-/Funk-Empfangseinrichtung (10, 20, 30, 40, 50) vorbereiteten Meldungen beruhen.

12. Funk-Sende-/Funk-Empfangseinrichtung (10, 20, 30, 40, 50) nach einem der vorhergehenden Ansprüche, **dadurch gekennzeichnet, dass** der Umfang als ein der Zahlenmenge Integer zugehöriger die Anzahl der zu versendenden Meldungen wiedergebender, insbesondere als *"channelLoadtoNeighbors"* bezeichneter, erster Wert ausgestaltet ist.

13. Funk-Sende-/Funk-Empfangseinrichtung (10, 20, 30, 40, 50) nach dem vorhergehenden Anspruch, die derart ausgestaltet ist, dass der erste Wert zumindest mit einem Teil von zu übertragenden Nachrichten, vorzugsweise jeder Nachricht, übermittelt wird.

14. Funk-Sende-/Funk-Empfangseinrichtung (10, 20, 30, 40, 50) nach dem vorhergehenden Anspruch, die derart ausgestaltet ist, dass die Übermittlung des ersten Wertes innerhalb eines Nachrichtenfeldes der Datenübertragung der Nachricht erfolgt.

15. Funk-Sende-/Funk-Empfangseinrichtung (10, 20, 30, 40, 50) nach dem vorhergehenden Anspruch, **dadurch gekennzeichnet, dass** das Nachrichtenfeld als Feld mit fester Bitbreite, insbesondere 4 Bit breit, ausgestaltet ist.

16. Funk-Sende-/Funk-Empfangseinrichtung (10, 20, 30, 40, 50) nach einem der beiden vorhergehenden Ansprüche, die derart ausgestaltet ist, dass sie als weitere Funk-Sende-/Funk-Empfangseinrichtung (10, 20, 30, 40, 50) auf Grundlage von von, insbesondere allen, benachbarten Funk-Sende- /Funk-Empfangseinrichtungen empfangenen ersten Werten einen der Zahlenmenge Integer zugehörigen, insbesondere als *"channelLoadfromNeighbors"* bezeichneten, zweiten Wert bildet.

17. Funk-Sende-/Funk-Empfangseinrichtung (10, 20, 30, 40, 50) nach dem vorhergehenden Anspruch, die derart ausgestaltet sie, dass bei Überschreiten eines, insbesondere als *"channelLoadfromNeighbors_active"* bezeichneten, ersten Schwellwertes durch den zweiten Wert die Häufigkeit der Aussendung von zeitlich folgender Meldungen auf einen dritten Wert festgelegt wird.

18. Funk-Sende-/Funk-Empfangseinrichtung (10, 20, 30, 40, 50) nach dem vorhergehenden Anspruch, die derart ausgestaltet ist, dass bei Überschreiten eines, insbesondere als *"channelLoadfromNeighbors_restrictive*" bezeichneten, zweiten Schwellwertes, durch den zweiten Wert die Häufigkeit der Aussendung von zeitlich folgenden Meldungen auf einen vierten Wert festgelegt wird.

19. Funk-Sende-/Funk-Empfangseinrichtung (10, 20, 30, 40, 50) nach dem vorhergehenden Anspruch, die derart ausgestaltet ist, dass bei Unterschreiten des zweiten Schwellwertes durch den zweiten Wert die Häufigkeit der Aussendung von zeitlich folgenden Meldungen auf den dritten Wert festgelegt wird.

20. Funk-Sende-/Funk-Empfangseinrichtung (10, 20, 30, 40, 50) nach dem vorhergehenden Anspruch, die derart ausgestaltet ist, dass bei Unterschreiten des ersten Schwellwertes durch den zweiten Wert die Häufigkeit der Aussendung von zeitlich folgenden Meldungen auf einen fünften Wert festgelegt wird.

21. Funk-Sende-/Funk-Empfangseinrichtung (10, 20, 30, 40, 50) nach dem vorhergehenden Anspruch, die derart ausgestaltet ist, dass erster und/oder zweiter Schwellwert derart festgelegt sind, dass die Differenz ihrer Werte größer Null, insbesondere Fünf, beträgt.

22. Funk-Sende-/Funk-Empfangseinrichtung (10, 20, 30, 40, 50) nach dem vorhergehenden Anspruch, die derart ausgestaltet ist, dass der dritte, vierte und/oder fünfte Wert gemäß definierter Systemzustände eine dezentrale, insbesondere gemäß dem ETSI TS 102 687 Standard vorgeschriebene als "Decentralized Congestion Control" bezeichnete, Lastensteuerung bildet.

23. Funk-Sende-/Funk-Empfangseinrichtung (10, 20, 30, 40, 50) nach einem der vorhergehenden Ansprüche, die derart ausgestaltet ist, dass die Kommunikation mit Verkehrteilnehmern zumindest teilweise gemäß einem Mobilfunkstandard, wie dem GSM, UMTS oder Derivaten hiervon, erfolgt.

24. Funk-Sende-/Funk-Empfangseinrichtung (10, 20, 30, 40, 50) nach einem der beiden vorhergehenden Ansprüche, **dadurch gekennzeichnet, dass** sie zur Kommunikation mit Verkehrteilnehmern zumindest teilweise gemäß dem europäischen Standard ETSI TC ITS, dem amerikanischen so genannten "Vehicle Safety Communications Program, VSC" oder japanischen "Advanced Vehicle Safety Program, AVS" ausgestaltet ist.

25. Funk-Sende-/Funk-Empfangseinrichtung (10, 20, 30, 40, 50) nach dem vorhergehenden Anspruch, **dadurch gekennzeichnet, dass** sie zur Kommunikation mit Verkehrsteilnehmern zumindest teilweise gemäß dem ISO Standard "continuous-air long and medium range", CALM, ausgestaltet ist.

26. Verfahren zur Kommunikation innerhalb eines nach Art des ad-hoc zusammenwirkenden, insbesondere Drahtlos-, Kraftfahrzeugkommunikationssystems, **dadurch gekennzeichnet, dass**
a) eine erste Funk-Sende-/Funk-Empfangseinrichtung (10, 20, 30, 40, 50) eine Information über den Umfang vorgesehener Meldungen (12, 22, 32, 42, 52) aussendet,
b) mindestens eine weitere Funk-Sende-/FunkEmpfangseinrichtung (10, 20, 30, 40, 50) die Information empfängt und
c) auf Basis der empfangenen Information von der weiteren Funk-Sende-/Funk-Empfangseinrichtung (10, 20, 30, 40, 50) eine Häufigkeit der Aussendung von zeitlich folgender Meldungen festgelegt wird.

27. Verfahren nach dem vorhergehenden Anspruch, bei dem die Kommunikation zwischen Verkehrsteilnehmern (10, 20, 30, 40, 50) untereinander und/oder zwischen Verkehrsteilnehmern (10, 20, 30, 40, 50) und Verkehrsinfrastruktur erfolgt.

28. Verfahren nach einem der beiden vorhergehenden Ansprüche, bei dem die Datenübertragung gemäß einem dedizierten Kurzstreckenfunkkommunikationsstandard, insbesondere dem so genannten Dedicated Short Range Communication, "DSRC", erfolgt.

29. Verfahren nach dem vorherigen Anspruch, bei dem die Datenübertragung gemäß dem so genannten Wireless Access in Vehicular Environments, "WAVE"-, Standard oder Derivaten hiervon erfolgt.

30. Verfahren nach dem vorhergehenden Anspruch, bei dem die Datenübertragung zumindest teilweise gemäß Standards IEEE 1609.4 und/oder ETSI Intelligent Transportation Systems, ITS oder seinen Derivaten erfolgt.

31. Verfahren nach einem der beiden vorhergehenden Ansprüche, bei dem die Datenübertragung zumindest teilweise gemäß Standards IEEE802.11 oder seinen Derivaten, insbesondere dem IEEE 802.11p, erfolgt.

32. Verfahren nach dem vorhergehenden Anspruch, bei der eine höher priorisierte erste, insbesondere sicherheitsrelevante, Datenübertragung gemäß IEEE 802.11e oder IEEE 802.11p gebildet wird.

33. Verfahren nach einem der Ansprüche 30 bis 31, bei der eine niedriger priorisierte zweite, insbesondere teilnehmerindividuelle, Datenübertragung gemäß dem IEEE 802.11 a/b/g gebildet wird.

34. Verfahren nach einem der vorhergehenden Ansprüche, bei dem die Meldungen Statusmeldungen über den Zustand eines Verkehrsteilnehmers (10, 20, 30, 40, 50) umfassen.

35. Verfahren nach einem der vorhergehenden Ansprüche, bei dem zur Aussendung von Meldungen ein Steuerkanal, insbesondere der so genannte Control Channel "CCH", ein Dienstekanal, insbesondere der so genannte Service Channel "SCH", genutzt wird.

36. Verfahren nach einem der vorhergehenden Ansprüche, bei der die Informationen über den Umfang vorgesehener Meldungen (12, 22, 32, 42, 52) auf in einem der Funk-Sende-/Funk-Empfangseinrichtung (10, 20, 30, 40, 50) zugeordneten Datenspeicher (11, 21, 31, 41, 51) vorliegenden zum Versand durch die Funk-Sende-/Funk-Empfangseinrichtung (10, 20, 30, 40, 50) vorbereiteten Meldungen beruhen.

37. Verfahren nach einem der vorhergehenden Ansprüchen, bei der der Umfang als ein der Zahlenmenge Integer zugehöriger die Anzahl der zu versendenden Meldungen wiedergebender, insbesondere als "channelLoadtoNeighbors" bezeichneter, erster Wert wiedergegeben wird.

38. Verfahren nach dem vorhergehenden Anspruch, bei dem der erste Wert zumindest mit einem Teil von zu übertragenden Nachrichten, vorzugsweise jeder Nachricht, übermittelt wird.

39. Verfahren nach dem vorhergehenden Anspruch, bei dem die Übermittlung des ersten Wertes innerhalb eines Nachrichtenfeldes der Datenübertragung der Nachricht erfolgt.

40. Verfahren nach dem vorhergehenden Anspruch, bei dem für das Nachrichtenfeld ein Feld mit fester Bitbreite, insbesondere 4 Bit breit, verwendet wird.

41. Verfahren nach einem der beiden vorhergehenden Ansprüchen, bei dem eine weitere Funk-Sende-/Funk-Empfangseinrichtung (10, 20, 30, 40, 50) auf Grundlage von von, insbesondere allen, benachbarten Funk-Sende-/Funk-Empfangseinrichtungen empfangenen ersten Werten einen der Zahlenmenge Integer zugehörigen, insbesondere als *"channelLoadfromNeighbors"* bezeichneten, zweiten Wert bildet.

42. Verfahren nach dem vorhergehenden Anspruch, bei dem bei Überschreiten eines, insbesondere als *"channelLoadfromNeighbors_active"* bezeichneten, ersten Schwellwertes durch den zweiten Wert die Häufigkeit der Aussendung von zeitlich folgender Meldungen auf einen dritten Wert festgelegt wird.

43. Verfahren nach dem vorhergehenden Anspruch, bei dem bei Überschreiten eines, insbesondere als *"channelLoadfromNeighbors*_*restrictive*" bezeichneten, zweiten Schwellwertes, durch den zweiten Wert die Häufigkeit der Aussendung von zeitlich folgenden Meldungen auf einen vierten Wert festgelegt wird.

44. Verfahren nach dem vorhergehenden Anspruch, bei dem bei Unterschreiten des zweiten Schwellwertes durch den zweiten Wert die Häufigkeit der Aussendung von zeitlich folgenden Meldungen auf den dritten Wert festgelegt wird.

45. Verfahren nach dem vorhergehenden Anspruch, bei dem bei Unterschreiten des ersten Schwellwertes durch den zweiten Wert die Häufigkeit der Aussendung von zeitlich folgenden Meldungen auf einen fünften Wert festgelegt wird.

46. Verfahren nach dem vorhergehenden Anspruch, bei dem der erste und/oder zweite Schwellwert derart festgelegt werden, dass die Differenz ihrer Werte größer Null, insbesondere Fünf, beträgt.

47. Verfahren nach dem vorhergehenden Anspruch, bei dem der dritte, vierte und/oder fünfte Wert gemäß definierter Systemzustände eine dezentrale, insbesondere gemäß dem ETSI TS 102 687 Standard vorgeschriebene als "Decentralized Congestion Control" bezeichnete, Lastensteuerung gebildet wird.

48. Verfahren nach einem der vorhergehenden Ansprüche, bei dem Kommunikation mit Verkehrteilnehmern zumindest teilweise gemäß einem Mobilfunkstandard, wie dem GSM, UMTS oder Derivaten hiervon, erfolgt.

49. Verfahren nach den vorhergehenden Ansprüchen, bei dem die Kommunikation mit Verkehrsteilnehmern zumindest teilweise gemäß dem europäischen Standard ETSI TC ITS, dem amerikanischen so genannten "Vehicle Safety Communications Program, VSC" oder japanischen "Advanced Vehicle Safety Program, AVS" erfolgt.

50. Verfahren nach dem vorhergehenden Anspruch, bei dem die Kommunikation mit Verkehrsteilnehmern zumindest teilweise gemäß dem ISO Standard "continuous-air long and medium range", CALM, erfolgt.

## Claims

1. Radio transmission/radio reception device (10, 20, 30, 40, 50) for communication within a, in particular wireless, motor vehicle communication system interacting in ad-hoc fashion, **characterized in that** it is designed in such a manner that
a) it emits an information item about the range of messages (12, 22, 32, 42, 52) provided,
b) at least one further radio transmission/radio reception device (10, 20, 30, 40, 50) receives the information and
c) on the basis of the received information, a frequency of the emission of successive messages over time is specified by the further radio transmission/radio reception device (10, 20, 30, 40, 50).

2. Radio transmission/radio reception device (10, 20, 30, 40, 50) according to Claim 1, **characterized in that** it is designed for the communication between road users (10, 20, 30, 40, 50) among one another and/or between road users (10, 20, 30, 40, 50) and traffic infrastructure.

3. Radio transmission/radio reception device (10, 20, 30, 40, 50) according to one of the preceding claims, **characterized in that** it is designed for data transmission according to a dedicated short-range radio communication standard, particularly the so-called Dedicated Short Range Communication, "DSRC".

4. Radio transmission/radio reception device (10, 20, 30, 40, 50) according to the previous claim, **characterized in that** it is designed for data transmission according to the so-called Wireless Access in Vehicular Environments, "WAVE", standard or derivatives thereof.

5. Radio transmission/radio reception device (10, 20, 30, 40, 50) according to the preceding claim, **characterized in that** it is designed for data transmission at least partially according to IEEE 1609.4 and/or ETSI Intelligent Transportation Systems, ITS standards or its derivatives.

6. Radio transmission/radio reception device (10, 20, 30, 40, 50) according to one of the two preceding claims, **characterized in that** it is designed for a data transmission at least partially according to IEEE 802.11 standards or its derivatives, particularly IEEE 802.11p.

7. Radio transmission/radio reception device (10, 20, 30, 40, 50) according to the preceding claim, **characterized in that** it is designed for a higher-priority first, particularly safety-related, data transmission according to IEEE 802.11e or IEEE 802.11p.

8. Radio transmission/radio reception device (10, 20, 30, 40, 50) according to one of Claims 6 to 7, **characterized in that** it is designed for a second lower-priority, particularly subscriber-individual, data transmission according to IEEE 802.11 a/b/g.

9. Radio transmission/radio reception device (10, 20, 30, 40, 50) according to one of the preceding claims, **characterized in that** the messages comprise status messages about the state of a road user (10, 20, 30, 40, 50).

10. Radio transmission/radio reception device (10, 20, 30, 40, 50) according to one of the preceding claims, which is designed in such a manner that for the emission of messages, a control channel, particularly the so-called control channel "CCH", a service channel, particularly the so-called service channel "SCH", is utilized.

11. Radio transmission/radio reception device (10, 20, 30, 40, 50) according to one of the preceding claims, **characterized in that** the information about the range of messages (12, 22, 32, 42, 52) provided is based on messages prepared for dispatch by the radio transmission/radio reception device (10, 20, 30, 40, 50), present in a data memory (11, 21, 31, 41, 51) allocated to the radio transmission/radio reception device (10, 20, 30, 40, 50).

12. Radio transmission/radio reception device (10, 20, 30, 40, 50) according to one of the preceding claims, **characterized in that** the range is designed as a first value belonging to the integer set of numbers, reproducing the number of the messages to be dispatched, designated especially as *"channelLoadtoNeighbors".*

13. Radio transmission/radio reception device (10, 20, 30, 40, 50) according to the preceding claim, which is designed in such a manner that the first value is conveyed at least with a part of messages to be transmitted, preferably each message.

14. Radio transmission/radio reception device (10, 20, 30, 40, 50) according to the preceding claim, which is designed in such a manner that the first value is conveyed within a message field of the data transmission of the message.

15. Radio transmission/radio reception device (10, 20, 30, 40, 50) according to the preceding claim, **characterized in that** the message field is designed as a field having a fixed bit width, particularly 4 bits wide.

16. Radio transmission/radio reception device (10, 20, 30, 40, 50) according to one of the two preceding claims, which is designed in such a manner that it, as a further radio transmission/radio reception device (10, 20, 30, 40, 50), forms on the basis of first values received by, especially all, adjacent radio transmission/radio reception devices, a second value belonging to the integer set of numbers, designated especially as *"channelLoadfromNeighbors".*

17. Radio transmission/radio reception device (10, 20, 30, 40, 50) according to the preceding claim, which is designed in such a manner that when a first threshold value, designated especially as *"channelLoadfromNeighbors_active",* is exceeded by the second value, the frequency of the emission of successive messages over time is specified at a third value.

18. Radio transmission/radio reception device (10, 20, 30, 40, 50) according to the preceding claim, which is designed in such a manner that when a second threshold value, designated especially as *"channelLoadfromNeighbors_restrictive",* is exceeded by the second value, the frequency of the emission of successive messages over time is specified at a fourth value.

19. Radio transmission/radio reception device (10, 20, 30, 40, 50) according to the preceding claim, which is designed in such a manner that when the second threshold value is undercut by the second value, the frequency of the emission of successive messages over time is specified at the third value.

20. Radio transmission/radio reception device (10, 20, 30, 40, 50) according to the preceding claim, which is designed in such a manner that when the first threshold value is undercut by the second value, the frequency of the emission of successive messages over time is specified at a fifth value.

21. Radio transmission/radio reception device (10, 20, 30, 40, 50) according to the preceding claim, which is designed in such a manner that the first and/or second threshold value are specified in such a manner that the difference of their values is greater than zero, especially five.

22. Radio transmission/radio reception device (10, 20, 30, 40, 50) according to the preceding claim, which is designed in such a manner that the third, fourth and/or fifth value, according to defined system states, forms a decentralized load control designated as "Decentralized Congestion Control" prescribed especially according to the ETSI TS 102 687 standard.

23. Radio transmission/radio reception device (10, 20, 30, 40, 50) according to one of the preceding claims, which is designed in such a manner that communication with road users takes place at least partially according to a mobile radio standard such as GSM, UMTS or derivatives thereof.

24. Radio transmission/radio reception device (10, 20, 30, 40, 50) according to one of the two preceding claims, **characterized in that** it is designed for communication with road users at least partially according to the European standard ETSI TC ITS, the American so-called "Vehicle Safety Communications Program, VSC" or the Japanese "Advanced Vehicle Safety Program, AVS".

25. Radio transmission/radio reception device (10, 20, 30, 40, 50) according to the preceding claim, **characterized in that** it is designed for communication with road users at least partially according to the ISO standard "continuous-air long and medium range", CALM.

26. Method for communication within a, in particular wireless, motor vehicle communication system interacting in ad-hoc fashion, **characterized in that**
a) a first radio transmission/radio reception device (10, 20, 30, 40, 50) emits an information item about the range of messages (12, 22, 32, 42, 52) provided,
b) at least a further radio transmission/radio reception device (10, 20, 30, 40, 50) receives the information and
c) on the basis of the received information, a frequency of the emission of successive messages over time is specified by the further radio transmission/radio reception device (10, 20, 30, 40, 50).

27. Method according to the preceding claim, in which the communication between road users (10, 20, 30, 40, 50) takes place among one another and/or between road users (10, 20, 30, 40, 50) and traffic infrastructure.

28. Method according to one of the two preceding claims, in which the data transmission takes place according to a dedicated short-range radio communication standard, particularly the so-called Dedicated Short-Range Communication "DSRC".

29. Method according to the preceding claim, in which the data transmission takes place according to the so-called Wireless Access in Vehicular Environments, "WAVE", standard or derivates thereof.

30. Method according to the preceding claim, in which the data transmission takes place at least partially according to IEEE 1609.4 and/or ETSI Intelligent Transportation Systems, ITS standards or its derivatives.

31. Method according to one of the two preceding claims, in which the data transmission takes place at least partially according to IEEE 802.11 standards or its derivatives, particularly IEEE 802.11p.

32. Method according to the preceding claim, in which a higher-priority first, particularly safety-related, data transmission is formed according to IEEE 802.11e or IEEE 802.11p.

33. Method according to one of Claims 30 to 31, in which a lower-priority second, particularly subscriber-individual, data transmission is formed according to IEEE 802.11 a/b/g.

34. Method according to one of the preceding claims, in which the messages comprise status messages about the state of a road user (10, 20, 30, 40, 50).

35. Method according to one of the preceding claims, in which for the emission of messages, a control channel, particularly the so-called control channel "CCH", a service channel, particularly the so-called service channel "SCH", is utilized.

36. Method according to one of the preceding claims, in which the information about the range of messages (12, 22, 32, 42, 52) provided is based on messages prepared for dispatch by the radio transmission/radio reception device (10, 20, 30, 40, 50), present in a data memory (11, 21, 31, 41, 51) allocated to the radio transmission/radio reception device (10, 20, 30, 40, 50).

37. Method according to one of the preceding claims, in which the range is reproduced as a first value belonging to the integer set of numbers, reproducing the number of the messages to be dispatched, designated especially as "channelLoadtoNeighbors".

38. Method according to the preceding claim, in which the first value is conveyed at least with a part of messages to be transmitted, preferably each message.

39. Method according to the preceding claims, in which the first value is conveyed within a message field of the data transmission of the message.

40. Method according to the preceding claim, in which a field having a fixed bit width, particularly 4 bits wide, is used for the message field.

41. Method according to one of the two preceding claims, in which a further radio transmission/radio reception device (10, 20, 30, 40, 50) forms on the basis of first values received by, especially all, adjacent radio transmission/radio reception devices, a second value belonging to the integer set of numbers, designated especially as *"channelLoadfromNeighbors".*

42. Method according to the preceding claim, in which, when a first threshold value, designated especially as *"channelLoadfromNeighbors_active",* is exceeded by the second value, the frequency of the emission of successive messages over time is specified at a third value.

43. Method according to the preceding claim, in which, when a second threshold value, designated especially as *"channelLoadfromNeighbors_restrictive",* is exceeded by the second value, the frequency of the emission of successive messages over time is specified at a fourth value.

44. Method according to the preceding claim, in which, when the second threshold value is undercut by the second value, the frequency of the emission of successive messages over time is specified at the third value.

45. Method according to the preceding claim, in which, when the first threshold value is undercut by the second value, the frequency of the emission of successive messages over time is specified at a fifth value.

46. Method according to the preceding claim, in which the first and/or second threshold value are specified in such a manner that the difference of their values is greater than zero, especially five.

47. Method according to the preceding claim, in which the third, fourth and/or fifth value is formed according to defined system states of a decentralized load control designated as "Decentralized Congestion Control" prescribed especially according to the ETSI TS 102 687 standard.

48. Method according to one of the preceding claims, in which communication with road users takes place at least partially according to a mobile radio standard such as GSM, UMTS or derivatives thereof.

49. Method according to the preceding claims, in which the communication with road users takes place at least partially according to the European standard ETSI TC ITS, the American so-called "Vehicle Safety Communications Program, VSC" or the Japanese "Advanced Vehicle Safety Program, AVS".

50. Method according to the preceding claim, in which the communication with road users takes place at least partially according to the ISO standard "continuous-air long and medium range", CALM.

## Revendications

1. Dispositif émetteur radio/récepteur radio (10, 20, 30, 40, 50) pour la communication dans un système de communication de véhicule du type d'interaction ad hoc, notamment sans fil, **caractérisé en ce qu'**il est réalisé de sorte que :
a) il émet une information relative à la taille de messages prévus (12, 22, 32, 42, 52) ;
b) au moins un autre dispositif émetteur radio/récepteur radio (10, 20, 30, 40, 50) reçoit l'information et
c) l'autre dispositif émetteur radio/récepteur radio (10, 20, 30, 40, 50) fixe, sur la base de l'information reçue, une fréquence d'émission de messages qui suivent dans le temps.

2. Dispositif émetteur radio/récepteur radio (10, 20, 30, 40, 50) selon la revendication 1, **caractérisé en ce qu'**il est réalisé pour la communication entre des usagers du trafic (10, 20, 30, 40, 50) entre eux et/ou entre des usagers du trafic (10, 20, 30, 40, 50) et l'infrastructure du trafic.

3. Dispositif émetteur radio/récepteur radio (10, 20, 30, 40, 50) selon l'une des revendications précédentes, **caractérisé en ce qu'**il est réalisé pour la transmission de données selon une norme de radiocommunication courte portée dédiée, en particulier selon la norme appelée Dedicated Short Range Communication « DSRC ».

4. Dispositif émetteur radio/récepteur radio (10, 20, 30, 40, 50) selon la revendication précédente, **caractérisé en ce qu'**il est réalisé pour la transmission de données selon la norme appelée Wireless Access in Vehicular Environments « WAVE » ou des dérivés de cette norme.

5. Dispositif émetteur radio/récepteur radio (10, 20, 30, 40, 50) selon la revendication précédente, **caractérisé en ce qu'**il est réalisé pour la transmission de données au moins en partie selon les normes IEEE 1609.4 et/ou ETSI Intelligent Transportation Systems ITS ou ses dérivés.

6. Dispositif émetteur radio/récepteur radio (10, 20, 30, 40, 50) selon l'une des deux revendications précédentes, **caractérisé en ce qu'**il est réalisé pour une transmission de données au moins en partie selon la norme IEEE 802.11 ou ses dérivés, en particulier la norme IEEE 802.11p.

7. Dispositif émetteur radio/récepteur radio (10, 20, 30, 40, 50) selon la revendication précédente, **caractérisé en ce qu'**il est réalisé pour une première transmission de données de priorité supérieure, en particulier une transmission de données de sécurité, selon IEEE 802.11e ou IEEE 802.11p.

8. Dispositif émetteur radio/récepteur radio (10, 20, 30, 40, 50) selon l'une des revendications 6 à 7, **caractérisé en ce qu'**il est réalisé pour une deuxième transmission de données de priorité inférieure, en particulier une transmission de données individuelle à l'usager, selon IEEE 802.11 a/b/g.

9. Dispositif émetteur radio/récepteur radio (10, 20, 30, 40, 50) selon l'une des revendications précédentes, **caractérisé en ce que** les messages incluent des messages d'état relatifs à l'état d'un usager du trafic (10, 20, 30, 40, 50).

10. Dispositif émetteur radio/récepteur radio (10, 20, 30, 40, 50) selon l'une des revendications précédentes, lequel est réalisé de telle manière qu'est utilisé, pour l'émission de messages, un canal de commande, en particulier le canal appelé Control Channel « CCH », un canal de services, en particulier le canal appelé Service Channel « SCH ».

11. Dispositif émetteur radio/récepteur radio (10, 20, 30, 40, 50) selon l'une des revendications précédentes, **caractérisé en ce que** les informations relatives à la taille de messages prévus (12, 22, 32, 42, 52) reposent sur des messages qui se trouvent dans une mémoire de données (11, 21, 31, 41, 51) associée au dispositif émetteur radio/récepteur radio (10, 20, 30, 40, 50) et qui sont préparés pour être envoyés par le dispositif émetteur radio/récepteur radio (10, 20, 30, 40, 50).

12. Dispositif émetteur radio/récepteur radio (10, 20, 30, 40, 50) selon l'une des revendications précédentes, **caractérisé en ce que** la taille est conçue comme étant une première valeur faisant partie de l'ensemble des nombres entiers, reproduisant le nombre des messages à envoyer, et appelée plus particulièrement « channelLoadtoNeighbors ».

13. Dispositif émetteur radio/récepteur radio (10, 20, 30, 40, 50) selon la revendication précédente, lequel est réalisé de manière telle que la première valeur est transmise au moins avec une partie de messages à transmettre, et de préférence de chaque message.

14. Dispositif émetteur radio/récepteur radio (10, 20, 30, 40, 50) selon la revendication précédente, lequel est réalisé de manière telle que la transmission de la première valeur s'effectue dans un champ de message de la transmission de données du message.

15. Dispositif émetteur radio/récepteur radio (10, 20, 30, 40, 50) selon la revendication précédente, **caractérisé en ce que** le champ de message se présente sous la forme d'un champ ayant une largeur binaire fixe, et plus particulièrement une largeur de 4 bits.

16. Dispositif émetteur radio/récepteur radio (10, 20, 30, 40, 50) selon l'une des deux revendications précédentes, lequel est réalisé de manière telle qu'il forme, en tant qu'autre dispositif émetteur radio/récepteur radio (10, 20, 30, 40, 50), sur la base de premières valeurs reçues de et plus particulièrement de tous les dispositifs émetteurs radio/récepteurs radio voisins, une deuxième valeur faisant partie de l'ensemble des nombres entiers et appelée plus particulièrement « channelLoadfromNeighbors ».

17. Dispositif émetteur radio/récepteur radio (10, 20, 30, 40, 50) selon la revendication précédente, lequel est réalisé de manière telle que, au dépassement d'une première valeur seuil appelée plus particulièrement « channelLoadfromNeighbors_active » par la deuxième valeur, la fréquence d'émission de messages qui suivent dans le temps est fixée à une troisième valeur.

18. Dispositif émetteur radio/récepteur radio (10, 20, 30, 40, 50) selon la revendication précédente, lequel est réalisé de manière telle que, au dépassement d'une deuxième valeur seuil appelée plus particulièrement « channelLoadfromNeighbors_restrictive » par la deuxième valeur, la fréquence d'émission de messages qui suivent dans le temps est fixée à une quatrième valeur.

19. Dispositif émetteur radio/récepteur radio (10, 20, 30, 40, 50) selon la revendication précédente, lequel est réalisé de manière telle que, au dépassement par le bas de la deuxième valeur seuil par la deuxième valeur, la fréquence d'émission de messages qui suivent dans le temps est fixée à la troisième valeur.

20. Dispositif émetteur radio/récepteur radio (10, 20, 30, 40, 50) selon la revendication précédente, lequel est réalisé de manière telle que, au dépassement par le bas de la première valeur seuil par la deuxième valeur, la fréquence d'émission de messages qui suivent dans le temps est fixée à une cinquième valeur.

21. Dispositif émetteur radio/récepteur radio (10, 20, 30, 40, 50) selon la revendication précédente, lequel est réalisé de manière telle que la première et/ou la deuxième valeur seuil sont fixées de telle sorte que la différence entre leurs valeurs est supérieure à zéro, et est en particulier égale à cinq.

22. Dispositif émetteur radio/récepteur radio (10, 20, 30, 40, 50) selon la revendication précédente, lequel est réalisé de manière telle que la troisième, la quatrième et/ou la cinquième valeur forment, selon des états définis du système, une commande de charge décentralisée, plus particulièrement prescrite conformément à la norme ETSI TS 102 687, et appelée « Decentralized Congestion Control ».

23. Dispositif émetteur radio/récepteur radio (10, 20, 30, 40, 50) selon l'une des revendications précédentes, lequel est réalisé de manière telle que la communication avec les usagers du trafic s'effectue au moins en partie selon une norme de radiotéléphonie mobile telle que GSM, UMTS ou des dérivés de ces normes.

24. Dispositif émetteur radio/récepteur radio (10, 20, 30, 40, 50) selon l'une des deux revendications précédentes, **caractérisé en ce qu'**il est réalisé pour la communication avec des usagers du trafic au moins en partie selon la norme européenne ETSI TC ITS, le « Vehicle Safety Communications Program, VSC » américain ou l'« Advanced Vehicle Safety Program, AVS » japonais.

25. Dispositif émetteur radio/récepteur radio (10, 20, 30, 40, 50) selon la revendication précédente, **caractérisé en ce qu'**il est réalisé pour la communication avec des usagers du trafic au moins en partie selon la norme ISO « continuous-air long and medium range » CALM.

26. Procédé de communication dans un système de communication de véhicule du type d'interaction ad hoc, notamment sans fil, **caractérisé en ce que** :
a) un premier dispositif émetteur radio/récepteur radio (10, 20, 30, 40, 50) émet une information relative à la taille de messages prévus (12, 22, 32, 42, 52) ;
b) au moins un autre dispositif émetteur radio/récepteur radio (10, 20, 30, 40, 50) reçoit l'information et
c) l'autre dispositif émetteur radio/récepteur radio (10, 20, 30, 40, 50) fixe, sur la base de l'information reçue, une fréquence d'émission de messages qui suivent dans le temps.

27. Procédé selon la revendication précédente, selon lequel la communication s'effectue entre des usagers du trafic (10, 20, 30, 40, 50) entre eux et/ou entre des usagers du trafic (10, 20, 30, 40, 50) et l'infrastructure du trafic.

28. Procédé selon l'une des deux revendications précédentes, selon lequel la transmission de données s'effectue selon une norme de radiocommunication courte portée dédiée, en particulier selon la norme appelée Dedicated Short Range Communication « DSRC ».

29. Procédé selon la revendication précédente, selon lequel la transmission de données s'effectue selon la norme appelée Wireless Access in Vehicular Environments « WAVE » ou des dérivés de cette norme.

30. Procédé selon la revendication précédente, selon lequel la transmission de données s'effectue au moins en partie selon les normes IEEE 1609.4 et/ou ETSI Intelligent Transportation Systems ITS ou ses dérivés.

31. Procédé selon l'une des deux revendications précédentes, selon lequel la transmission de données s'effectue au moins en partie selon la norme IEEE 802.11 ou ses dérivés, en particulier la norme IEEE 802.11p.

32. Procédé selon la revendication précédente, selon lequel est constituée une première transmission de données de priorité supérieure, en particulier une transmission de données de sécurité, selon IEEE 802.11e ou IEEE 802.11p.

33. Procédé selon l'une des revendications 30 à 31, selon lequel est constituée une deuxième transmission de données de priorité inférieure, en particulier une transmission de données individuelle à l'usager, selon IEEE 802.11 a/b/g.

34. Procédé selon l'une des revendications précédentes, selon lequel les messages incluent des messages d'état relatifs à l'état d'un usager du trafic (10, 20, 30, 40, 50).

35. Procédé selon l'une des revendications précédentes, selon lequel est utilisé, pour l'émission de messages, un canal de commande, en particulier le canal appelé Control Channel « CCH », un canal de services, en particulier le canal appelé Service Channel « SCH ».

36. Procédé selon l'une des revendications précédentes, selon lequel les informations relatives à la taille de messages prévus (12, 22, 32, 42, 52) reposent sur des messages qui se trouvent dans une mémoire de données (11, 21, 31, 41, 51) associée au dispositif émetteur radio/récepteur radio (10, 20, 30, 40, 50) et qui sont préparés pour être envoyés par le dispositif émetteur radio/récepteur radio (10, 20, 30, 40, 50).

37. Procédé selon l'une des revendications précédentes, selon lequel la taille est reproduite comme étant une première valeur faisant partie de l'ensemble des nombres entiers, reproduisant le nombre des messages à envoyer, et appelée plus particulièrement « channelLoadtoNeighbors ».

38. Procédé selon la revendication précédente, selon lequel la première valeur est transmise au moins avec une partie de messages à transmettre, et de préférence de chaque message.

39. Procédé selon la revendication précédente, selon lequel la transmission de la première valeur s'effectue dans un champ de message de la transmission de données du message.

40. Procédé selon la revendication précédente, selon lequel est utilisé, pour le champ de message, un champ ayant une largeur binaire fixe, et plus particulièrement une largeur de 4 bits.

41. Procédé selon l'une des deux revendications précédentes, selon lequel un autre dispositif émetteur radio/récepteur radio (10, 20, 30, 40, 50) forme, sur la base de premières valeurs reçues de et plus particulièrement de tous les dispositifs émetteurs radio/récepteurs radio voisins, une deuxième valeur faisant partie de l'ensemble des nombres entiers et appelée plus particulièrement « channelLoadfromNeighbors ».

42. Procédé selon la revendication précédente, selon lequel, au dépassement d'une première valeur seuil appelée plus particulièrement « channelLoadfromNeighbors_active » par la deuxième valeur, la fréquence d'émission de messages qui suivent dans le temps est fixée à une troisième valeur.

43. Procédé selon la revendication précédente, selon lequel, au dépassement d'une deuxième valeur seuil appelée plus particulièrement « channelLoadfromNeighbors_restrictive » par la deuxième valeur, la fréquence d'émission de messages qui suivent dans le temps est fixée à une quatrième valeur.

44. Procédé selon la revendication précédente, selon lequel, au dépassement par le bas de la deuxième valeur seuil par la deuxième valeur, la fréquence d'émission de messages qui suivent dans le temps est fixée à la troisième valeur.

45. Procédé selon la revendication précédente, selon lequel, au dépassement par le bas de la première valeur seuil par la deuxième valeur, la fréquence d'émission de messages qui suivent dans le temps est fixée à une cinquième valeur.

46. Procédé selon la revendication précédente, selon lequel la première et/ou la deuxième valeur seuil sont fixées de telle sorte que la différence entre leurs valeurs est supérieure à zéro, et est en particulier égale à cinq.

47. Procédé selon la revendication précédente, selon lequel la troisième, la quatrième et/ou la cinquième valeur forment, selon des états définis du système, une commande de charge décentralisée, plus particulièrement prescrite conformément à la norme ETSI TS 102 687, et appelée « Decentralized Congestion Control ».

48. Procédé selon l'une des revendications précédentes, selon lequel la communication avec les usagers du trafic s'effectue au moins en partie selon une norme de radiotéléphonie mobile telle que GSM, UMTS ou des dérivés de ces normes.

49. Procédé selon les revendications précédentes, selon lequel la communication avec des usagers du trafic s'effectue au moins en partie selon la norme européenne ETSI TC ITS, le « Vehicle Safety Communications Program, VSC » américain ou l'« Advanced Vehicle Safety Program, AVS » japonais.

50. Procédé selon la revendication précédente, selon lequel la communication avec des usagers du trafic s'effectue au moins en partie selon la norme ISO « continuous-air long and medium range » CALM.
